**Europäisches Patentamt**

**European Patent Office** (11) Publication number: **0 253 481**

**Office européen des brevets** **A2**

(19)

(12) **EUROPEAN PATENT APPLICATION**

(21) Application number: **87304778.1** (51) Int. Cl.⁴: **C 05 F 9/02**

(22) Date of filing: **29.05.87**

(30) Priority: **16.07.86 GB 8617265**
**12.01.87 GB 8700566**

(71) Applicant: **Tollemache, Denys Herbert George, 76 The Mint, Rye Sussex TN31 7UW (GB)**

(43) Date of publication of application: **20.01.88 Bulletin 88/3**

(72) Inventor: **Tollemache, Denys Herbert George, 76 The Mint, Rye Sussex TN31 7UW (GB)**

(74) Representative: **Williams, Trevor John et al, J.A. KEMP & CO. 14 South Square Gray's Inn, London WC1R 5EU (GB)**

(84) Designated Contracting States: **DE ES FR GR IT SE**

(54) **Improved composting plant.**

(57) A composting plant comprises a series of side-by-side elongated silos (1, 2, 3, 4) with a turning device (F) movable lenthwise of a silo lifting composting material therefrom and transferring it to the adjacent silo. The turning device F comprises a flexible conveyor (5) extending over wheels at the top and bottom thereof so as to be capable of lifting material through a substantial height and flinging it back for deposition on a cross conveyor (6) which deposits it into an adjacent silo. Means are described for disabling the cross conveyor so that the lifted material can simply be returned, turned and aerated, into the same silo from which it has been lifted.

-1-

## "IMPROVED COMPOSTING PLANT"

This invention relates to an improved composting plant and more especially to a composting plant in which improved means are provided for turning over compost in elongated silos and for transferring compost from one silo to an adjacent silo.

A known composting plant which has been in operation for some years comprises a plurality of side-by-side elongated silos. Material to be composted is fed into a first of these silos and after a residence period therein is aerated and turned by being transferred to an adjacent silo from which it will later be further turned into a further silo, and so on. With movement from silo to silo finally mature compost can be obtained from the final silo after a relatively short total residence time in the various silos. In this prior construction, the turning device comprised a large wheel of approaching four metres in diameter. The wheel comprised slats which picked up the material as the wheel was advanced through the silo. As the slats approached the top of their travel, material supported on them slipped off to be dropped onto an inclined auger-like conveyor, extending from the interior of the wheel and projecting over the side of the silo. This auger-like conveyor carried material deposited thereonto into the next silo to be deposited in that silo for the next stage of its composting. This prior device has certain disadvantages. Because the need for the wheel to be substantially higher than the silo, it meant that the maximum silo depth was about two metres which is limiting to the amount of material which can be contained within the silo and thus an excessive floor area is required if substantial quantities of waste material containing organic material is to be composted. Furthermore, in order for the material safely to drop through the wheel onto the auger-like conveyor, the speed of rotation of the wheel was itself limited, in practice it being about 3 rpm, which again slows operation of the plant in that the wheel can only be advanced quite slowly lengthwise of the silo. Also, this prior known plant was not adapted to turn waste other than by transfer to an adjacent silo and this reduces the amount of turning which can be achieved and thus has a deleterious effect in that it slows the rate of composting as compared with that which can be achieved with frequent turning.

The present invention is directed at providing an improved composting plant in which the turning device is such that the silo can be extended to substantially greater depths than with the previous plant and in which the turning of the waste material being composted can be greatly speeded, allowing more frequent turning operations to be achieved without the requirement to transfer from one silo to another during turning.

-3-

According to the present invention, there is provided a composting plant comprising a rectangular silo, means for supplying air to the bottom of the silo for aerating the contents thereof, a material turning device mounted for movement lengthwise of the silo and extending through substantially the entire width of the silo, and a cross conveyor extending over one side of the silo and adapted to receive material discharged from the material turning device, said material turning device comprising a flexible conveyor having a substantially straight forward facing run extending from near the bottom to above the top of the sides of the silo, a return rearwardly facing run and means for driving said flexible conveyor with the forward run moving upwardly to lift material in the silo for discharge rearwardly to said cross conveyor. Preferably a movable deflecting device is provided for controlling flow of material from the flexible conveyor to the cross conveyor.

Conveniently the flexible conveyor is guided and supported by wheels or rollers at the top and bottom of forward and rearwardly facing runs and preferably is comprised by metal chains running over chain wheels and carrying slats extending transversely of the silo between the chains.

Preferably, means are provided enabling the turning device to be removed from the end of the silo and turned round so that it can progress back up the silo

-4-

without always needing to operate from the same end of the silo.

The invention will be further described, by way of example, with reference to the accompanying drawings, in which:

Figure 1 is a diagrammatic plan view of an arrangement of side-by-side silos;

Figure 2 is a diagrammatic side view of part of a composting plant embodying the present invention, showing the turning device for turning material in the silo;

Figure 3 is a view similar to Figure 2 but showing a prior art turning device;

Figure 4 is a diagrammatic end view showing operation of the device of Figure 3; and

Figure 5 is a view similar to Figure 4 but showing operation of the composting part of the invention.

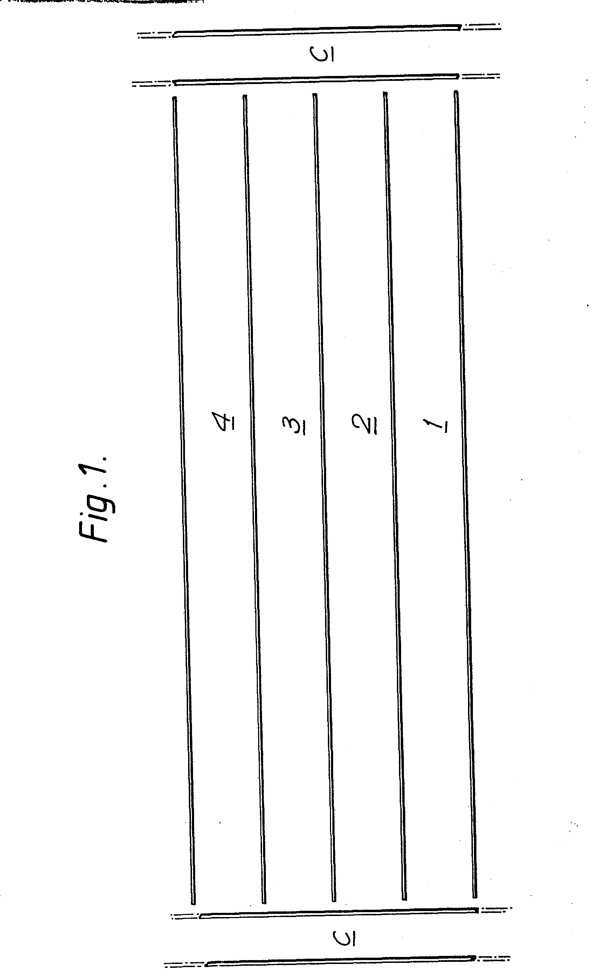

Referring to the drawings, in Figure 1 there are shown four side-by-side elongated open-topped silos 1,2,3,4. At each end of these silos there is shown a track C for use for supporting a transfer means as will later be described. The ends of the silos are shown open although they may be provided with openable doors.

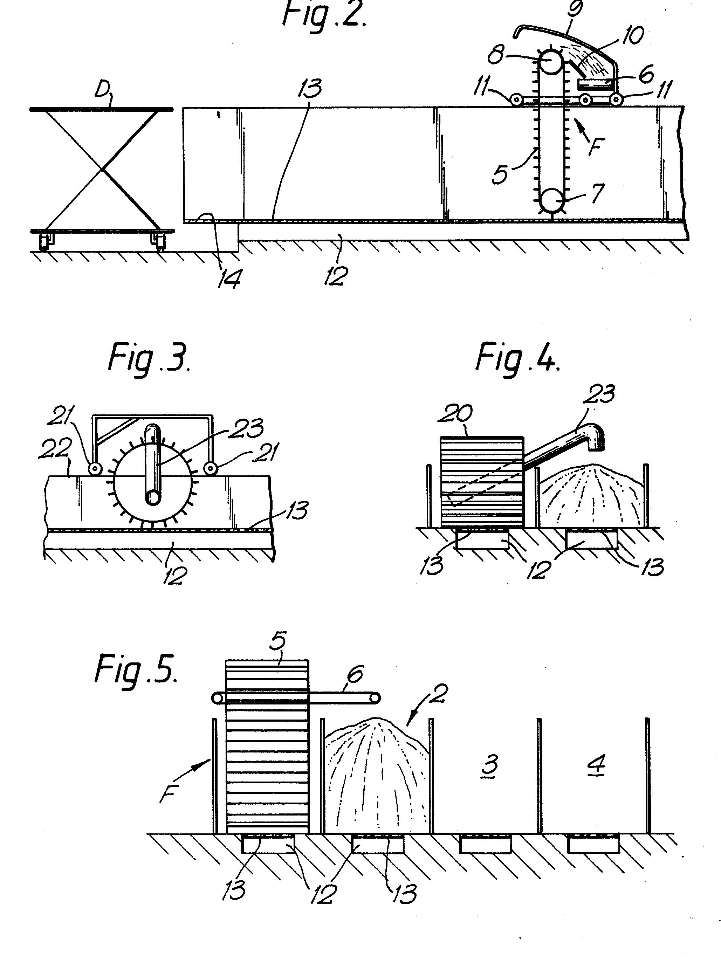

Figure 2 shows the turning device as used in the silos of Figure 1. The turning device F comprises a flexible conveyor 5 having a forwardly-facing, upwardly-moving run and a rearwardly-facing, downwardly-moving run limited at the top and bottom by supporting wheels 8 and 7, respectively. A motor, not shown, is provided for driving the upper wheels 8 and in a particular form of conveyor, it is comprised by chains passing over the chain wheels with slats extending between the chains and extending transversely of the silo. The turning device extends over substantially the entire width of the silo and preferably the forwardly-facing run extends substantially vertically although this is not essential and in some cases it may be preferred for it to be inclined slightly rearwardly.

Behind the elevating conveyor 5, there is provided a cross conveyor 6 for discharging material lifted by the conveyor 5 transversely into an adjacent silo, as shown in Figure 5. The turning device comprising the flexible conveyor 5 and the conveyor 6 are supported by wheels 11 to move along track at the top edges of the silo.

A baffle plate 9 is provided above the turning device for limiting the distance material discharged from the upwardly moving conveyor 5 may be thrown so as to permit this conveyor to operate at a relatively fast speed. A deflector plate 10 is provided for guiding material discharged from the flexible conveyor 5 to the cross conveyor 6. The plate 10 may be pivotable about its lower end from the position shown to an upright position in which it intercepts the path of material to the conveyor 6 so that the material will drop back into the silo between the return run of the conveyor 5 and the side of the cross conveyor 6. Alternatively, the plate 10 may be pivotable near its upper end so as to be movable to a position to deflect material over and beyond the far edge of the cross conveyor 6, the plate 9 simultaneously being raised to permit such movement of the material being turned and returned to the silo.

The bottom of the silo is provided with a plenum chamber 12 for supplying air through a perforated bottom 13. The end portion 14 of the bottom is not perforated so that air cannot escape from an end portion when the material in the silo does not extend fully to the end of the silo, taking into account the fact that the ends of the silo may themselves be left open for passage therethrough of the turning device F for support by a transfer means D.

The transfer means D comprises rails alignable with the edges of the silo and is itself mounted for movement transversely of the silos along the track C. The transfer means D is capable of operating as a turntable so that the turning device F can be rotated through 180° for return to the silo for operating movement back along the length of the silo. Alternatively, the turning device can be arranged to shuttle back and forth along the silo without being turned round. Thus, while when moving from left to right as shown in Figure 2, the device can be used simply to turn or to transfer material to the adjacent silo as required, when moving from right to left with the turning conveyor 5 in reverse, the device can only operate in the turning mode to turn and aerate the material.

In operation of the composting device, material will be discharged into the silo 1 by conveyors, not shown. The material will be aerated by air supplied through the perforated bottom 13 of the silo and can be turned by movement of the turning device F lengthwise of the silo with the plate 10 positioned to stop material reaching the cross conveyor 6. Alternatively, instead of having the plate 10 movable to prevent material passing to the cross conveyor, the cross conveyor 6 may be simply removed so that the material is picked up by the turning device and thrown back over the top to be redeposited behind the turning device. Operating in this way, the material will be progressed down the silo and can be turned over quite briskly, giving a breaking down action, due to the manner in which the baffle 9 limits the extent to which lifted materials being turned can be thrown. Preferably, the plates 10 and 9 are so positionable that some only of the material lifted by the conveyor 5 is deposited on the conveyor, the rest being returned to the silo. This enables a proportion of material in the silo to be transferred to the adjacent silo for topping up purposes to allow for compaction and reduction in material volume during composting.

When the required degree of processing in the first silo has been achieved, the turning device can be advanced along the silo with the cross conveyor 6 in operation so that the material in the silo is lifted and discharged into the next silo 2, leaving the silo 1 empty for replenishment with fresh waste material. The material can then be moved stage by stage from silo 2 to silo 3 and from silo 3 to silo 4 as required. Of course, once the silos are all full the actual order of processing is first to empty silo 4, then to discharge silo 3 into it, and so on until silo 1 is empty and ready for replenishment. Conventionally, the material from silo 4 will then be discharged over the edge of the silo, either for collection on a conveyor, not shown, to be carried to a screening plant, or to be dumped on the ground from which it can be picked up by digging and transfer means for subsequent use with, or without, first being transferred through a screening device for removing large lumps or metals which might have been left in the original waste materials being treated as not having been removed at an initial pulverising stage, prior to feed to the silo 1. A plate may be provided adjacent the lower end of the downwardly moving run of the conveyor 5 to prevent the conveyor 5 from taking material from behind it and passing it beneath its lower end for lifting again on the upwardly moving run. Either simple liftable plates may be provided both to the front and to the rear of the conveyor 5 to permit it to operate in either direction, or a "roller-blind" type arrangement may be used for movement beneath the lower end of the conveyor 5 for alternative positioning on either side of the lower end thereof.

Figure 3 shows the prior art device in which the large wheel 20 is rotatable to pick up waste material in the silo so that it drops from the top of the wheel into the inclined auger-like conveyor 23 for discharge into the adjacent silo as shown in Figure 4. The wheel like turning device is supported by rollers 21 on tracks 22 at the top of the silo. As indicated, this prior art device necessarily operates quite slowly and cannot be used for the rapid turning operation as can be the device shown in Figure 2.

A preferred form of the turning device will be somewhat like a trencher which can be arranged vertically, or slightly inclined leaning back from the vertical although preferably it will be substantially vertical. The height of the device is such that starting at the base of the silo the device will reach a height above the top of the silo sufficient to feed the composting materials onto the cross conveyor pulled behind the actual turning device or to throw it backwards into the same silo as required.

The turning device itself can conveniently comprise a carriage having two wheels running on each of the two rails on top of each silo wall. Attached to the carriage are two members, or one member may be used if of box section, which will be attached to vertical members spaced with a reasonable clearance from the silo walls. These carry bearings for supporting a cross shaft at the bottom and top of the device with two or more chains being mounted on each of these shafts. The chains have attachments at intervals which will carry the cross slats. Normally, an electric motor will be used to drive the device, either directly or through a hydraulic or other coupling.

While a single motor may be used both to power the device and to provide for a progression along the silo preferably a separate, lower power, motor will be used to give the longitudinal driving motion. This facilitates variation of the relative speeds of the lifting conveyor and the driving motion depending upon the weight and density of the composting material to be turned. Thus while it is possible to regulate the speed of progression to control the capacity, control means may be provided whereby the speed of progression along the silo will be automatically controlled to keep the motor driving the lifter chain within its operating capacity without overload.

While one particular form of flexible conveyor has been described above, it will be appreciated that this may be varied in practice, for example there may be used a flexible belt conveyor with metal teeth adapted to operate at a faster speed than the device so far described. In such a device it would be necessary to provide some means for sweeping dust and dirt from the interior of the chain and in all devices the bearings would need to be sealed and protection provided, as required, to prevent or reduce deleterious effects of the environment in which the device operates.

In some instances materials can take a very long time to heat to the best active temperature. Whilst this can be dealt with by enclosing the top of a silo so that air can be circulated from the top of the silo back into the bottom of the silo, partially heated by passage through the material in the silo, so as to avoid undue waste of heat to the outer atmosphere until such time as the silo has heated to the required temperature, a more simple way of promoting start-up would be to use the cross conveyors to transfer fermented or partially fermented material in the reverse direction so as to end up in the first silo to be mixed with fresh material added to the first silo. Alternatively some, preferably about 10%, of the material in the first silo can be left therein when the remainder is transferred to the second silo to act as a starter for fresh material to be treated, added to the first silo.

0253481

-12-

C L A I M S

1. A composting plant comprising a rectangular silo (1), means (12) for supplying air to the bottom of the silo for aerating the contents thereof, a material turning device (F) mounted for movement lengthwise of the silo and extending through substantially the entire width of the silo, and a cross conveyor (6) extending over one side of the silo and adapted to receive material discharged from the material turning device, characterised in that said material turning device (F) comprises a flexible conveyor having a substantially straight forwardly facing run (5) extending from near the bottom to above the top of the sides of the silo, a return rearwardly facing run and means for driving said flexible conveyor with the forwardly facing run moving upwardly to lift material in the silo for discharge rearwardly to said cross conveyor (6).

2. A composting plant according to claim 1, characterised in that the flexible conveyor runs over wheels or rollers (8,7) at the top and bottom of the forwardly and rearwardly facing runs.

3. A composting plant according to claim 2, characterised in that the flexible conveyor is comprised by metal chains running over chain wheels and carrying slats extending transversely of the silo between the chains.

-13-

4. A composting plant according to any preceding claim, characterised in that the cross conveyor is removable from the turning device whereby the turning device can be used simply to turn material in a single silo.

5. A composting device according to any preceding claim, characterised in that a movable deflecting device (10) is provided for controlling flow of material from the flexible conveyor to the cross conveyor, the movable deflecting device preferably being positionable to cause part of the lifted material to be passed to the cross conveyor and the remainder to be returned to the silo.

6. A composting device according to any preceding claim, characterised in that a barrier is selectively positionable adjacent the lower end of the downwardly movable run of the flexible conveyor.

7. A composting device according to claim 6, characterised in that the barrier is provided by two plates alternatively positionable adjacent the opposite runs at the lower end of the flexible conveyor or by a flexible device alternatively positionable adjacent the opposite runs at the lower end of the flexible conveyor by being movable beneath the lower end of the flexible conveyor.

8. A composting device according to any preceding claim, characterised in that the turning device is removable through an open or openable end of the silo.

-14-

9. A composting plant according to claim 8, characterised in that a transfer means (C,D) is arranged to receive and support the turning device when it is removed through an open end of the silo.

10. A composting plant according to claim 9, characterised in that the transfer means (D) is capable of acting as a turntable whereby the turning device (F) can be rotated through 180° before being returned to the silo.

11. A composting plant according to claim 9 or 10, characterised in that a plurality of side-by-side silos (1,2,3,4) are provided with the transfer means (C,D) being capable of taking the turning device (F) leaving one silo and carrying it transversely of the silos for use in the or one other silo.

0253481

1/2

Fig.1.

Fig.2.

Fig.3.

Fig.4.

Fig.5.